# EUROPEAN PATENT SPECIFICATION

(11) **EP 1 840 163 B1**
(45) Date of publication and mention of the grant of the patent: **12.05.2010**
(21) Application number: 06711973.5
(22) Date of filing: 19.01.2006
(51) Int. Cl.: C08L 21/00, C08L 23/08, C08K 3/22, C08L 9/02, H01B 3/28

(54) **FLAME RETARDANT RUBBER COMPOSITION, AND RUBBER PRODUCT AND COVERING MATERIAL FOR ELECTRICAL WIRE OBTAINED THEREFROM**
FLAMMHEMMENDE KAUTSCHUKZUSAMMENSETZUNG UND KAUTSCHUKPRODUKT DARAUS SOWIE BESCHICHTUNGSMATERIAL FÜR EINEN ELEKTRISCHEN DRAHT
COMPOSITION DE CAOUTCHOUC IGNIFUGE, PRODUIT EN CAOUTCHOUC ET MATÉRIAU DE REVÊTEMENT POUR FIL ÉLECTRIQUE OBTENUS À PARTIR DE LADITE COMPOSITION

(30) Priority: 21.01.2005 JP 2005014497
(43) Date of publication of application: 03.10.2007
(73) Proprietor: JSR Corporation, Tokyo 104-8410 (JP)
(72) Inventor: MORIOKA, Seiji, u, Tokyo, 1048410 (JP); HASEGAWA, Mamoru, u, Tokyo, 1048410 (JP); HASEGAWA, Kenji, u, Tokyo, 1048410 (JP); KOUJINA, Junji, u, Tokyo, 1048410 (JP)
(74) Representative: TBK-Patent
(86) International application number: PCT/JP2006/300727
(87) International publication number: WO 2006/077918

(56) References cited:
- EP-A- 0 251 792
- WO-A-2005/123828
- JP-A- 06 041 353
- JP-A- 2003 160 695
- JP-A- 2004 262 963
- JP-A- 2004 262 963
- JP-A- 2004 339 451
- JP-A- 2004 339 451
- US-A- 3 951 894

## Description

### Technical Field

The present invention relates to a flame-retardant rubber composition capable of yielding a vulcanized rubber showing excellent flame retardancy in high-temperature atmospheres, as well as to a rubber product and a covering material for electrical wire, both obtained therefrom. More particularly, the present invention relates to a flame-retardant rubber composition which can give a fully satisfactory mechanical strength (particularly, tensile strength at break) even when subjected to steam cure generally regarded to be difficult to impart a strength.

### Background Art

Many synthetic rubbers have rubber elasticity equivalent to that of natural rubber and are superior to natural rubber in properties such as chemical resistance, oil resistance, heat resistance and the like; therefore, synthetic rubbers find wide applications such as automobile parts, electrical appliance parts, mechanical parts, materials for civil engineering and construction, and the like. In recent years, however, the environments in which parts (e.g. rolls and belts) using synthetic rubbers are used, have become severer as automobiles, electrical appliances, etc. have come to possess higher performances. In particular, the atmospheric temperature at which the parts are used, is rising steadily, and there are being required synthetic rubbers which can show excellent flame retardancy in high-temperature atmospheres.

For imparting flame retardancy to a synthetic rubber or a resin, there has been generally used a method of compounding therein a halogen-based flame retardant such as tetrachlorophthalic acid, chlorinated paraffin or the like. Halogen-based flame retardants can show excellent flame retardancy even when compounded in a small amount; however, they generate a corrosive and toxic gas when burnt and have a problem to be solved in pollution prevention and harmony with environment. Hence, there is being investigated a method of compounding a non-halogen-based flame retardant.

As a resin composition containing a non-halogen-based flame retardant, there was disclosed, for example, a flame-retardant polypropylene resin composition wherein a phosphorus-based flame retardant (e.g. ammonium polyphosphate) is compounded in a polypropylene resin (see, for example, a patent literature 1). There was also disclosed a high-strength, flame-retardant rubber composition wherein a metal hydroxide-based flame retardant (e.g. aluminum hydroxide or magnesium hydroxide) is compounded in an ethylene-α-olefin copolymer rubber (see, for example, a patent literature 2). There was further disclosed, by the present applicant, a flame-retardant rubber composition wherein a metal hydroxide-based flame retardant is compounded in a rubber composition composed mainly of an unsaturated nitrile-conjugated diene rubber and an ethylene-α-olefin random copolymer (see, for example, patent literatures 3 and 4).

Patent literature 1: JP-A-1990-263851
Patent literature 2: JP-A-1994-107870
Patent literature 3: JP-A-2003-160695
Patent literature 4: JP-A-2004-262963

### Disclosure of the Invention

A resin or rubber composition containing a phosphorus-based flame retardant, such as described in the patent literature 1 has an advantage in that it generates no corrosive or toxic gas when burnt, unlike the case containing a halogen-based flame retardant. However, since phosphorus as well is an environment pollutant, the resin or rubber composition has the same problem as in the case containing a halogen-based flame retardant, in pollution prevention and harmony with environment. Since the phosphorus-based flame retardant has hygroscopicity, the resin or rubber composition also has a problem in that the composition inevitably causes bleeding associated with the hygroscopicity. This bleeding can be alleviated slightly by compounding of a silane coupling agent or the like; however, such compounding of a silane coupling agent or the like may reduce the priability or flexibility of rubber and therefore the resulting composition has a room for improvement in properties of rubber.

A rubber composition containing a metal hydroxide-based flame retardant, such as described in the patent literature 2 generates no corrosive or toxic gas when burnt, unlike the case containing a halogen-based flame retardant and further contains no environment pollutant (e.g. phosphorus); therefore, the composition has an advantage in that it is superior in pollution prevention and harmony with environment. However, the metal hydroxide-based flame retardant need be used in a considerably large amount for achieving sufficient flame retardancy and, when the metal hydroxide-based flame retardant has been compounded in such an amount, there may be reductions in rubber properties such as flexibility, processability and mechanical properties, particularly, tensile strength. Thus, no full satisfaction has been obtained in rubber properties.

The present applicant succeeded in improvement in the mechanical strengths of a rubber composition containing a metal hydroxide-based flame retardant, by, as described in the patent literature 3, using, as a base synthetic rubber, an unsaturated nitrile-conjugated diene rubber having a high content of an unsaturated nitrile unit, or by, as described in the patent literature 4, employing an idea of using a surface-treated magnesium hydroxide as a fame retardant. However, when the rubber composition is used in applications such as covering material for electrical wire and the like, there have been cases that no fully satisfactory mechanical strengths (particularly, tensile strength at break) are obtained, because, in such applications, steam cure, which is generally regarded to be incapable of imparting an intended strength is employed for low production cost and apparatus simplicity. Thus, a further improvement in mechanical strengths has been needed for the composition.

As appreciated from the above description, there is yet no disclosure on a rubber composition which has excellent flame retardancy and can give a fully satisfactory mechanical strength (particularly, tensile strength at break) even when subjected to steam cure generally regarded to be incapable of impart a strength. Hence, development of such a rubber composition is desired in the industry.

The present invention has been made in order to solve the above-mentioned problems of the prior art and provides a flame-retardant rubber composition which has excellent flame retardancy and can give a fully satisfactory mechanical strength (particularly, tensile strength at break) even when subjected to steam cure generally regarded to be difficult to impart a strength.

The present inventors made a study in order to solve the above-mentioned problems of the prior art. As a result, the present inventors thought of an idea that the above problems can be solved by compounding a polyfunctional monomer in a rubber composition, and have completed the present invention. Specifically, the present invention lies in a flame-retardant rubber composition, a rubber product and a covering material for electrical wire, all described below.

[1] A flame-retardant rubber composition comprising, as essential components, a synthetic rubber (a component A), a flame-retardant (a component B), sulfur (a component C), a polyfunctional monomer (a component D) and a crosslinking accelerator, wherein an amount of the component B is 10 to 200 parts by mass, an amount of the component C is 0.1 to 15 parts by mass and an amount of the component D is 3 to 30 parts by mass, all relative to 100 parts by mass of the component A.

[2] A flame-retardant rubber composition according to [1], which further comprises silica (a component E) and wherein an amount of the component E is 2 to 100 parts by mass relative to 100 parts by mass of the component A.

[3] A flame-retardant rubber composition according to [1] or [2], wherein the component A is a synthetic rubber containing at least one member selected from the group consisting of an ethylene-α-olefin copolymer rubber, an unsaturated nitrile-conjugated diene rubber, a styrene-butadiene rubber and an acrylic rubber.

[4] A flame-retardant rubber composition according to any one of [1] to [3], wherein the component A comprises, as components, an ethylene-α-olefin copolymer rubber (a component A-1) and an unsaturated nitrile-conjugated diene rubber (a component A-2) and the ratio of the component A-1 and the component A-2 is 5:95 to 85:15.

[5] A flame-retardant rubber composition according to any one of [1] to [4], wherein the component B is magnesium hydroxide.

[6] A flame-retardant rubber composition according to any one of [1] to [5], wherein the component D is a polyfunctional acrylate compound or a polyfunctional isocyanate compound.

[7] A flame-retardant rubber composition according to any one of [1] to [6], wherein the component D is a polyfunctional monomer which is liquid at normal temperature (25°C) .

[8] A flame-retardant rubber composition according to any one of [1] to [7], which, when subjected to steam cure, gives a vulcanized rubber having a tensile strength at break, of 13 MPa or higher.

[9] A rubber product comprising a vulcanized rubber obtained by vulcanizing a flame-retardant rubber composition set forth in any one of [1] to [8].

[10] A covering material for electrical wire, comprising a vulcanized rubber obtained by vulcanizing a flame-retardant rubber composition set forth in any one of [1] to [8].

The flame-retardant rubber composition has excellent flame retardancy and can give a fully satisfactory mechanical strength (particularly, tensile strength at break) even when subjected to steam cure generally regarded to be difficult to impart a strength.

### Best Mode for Carrying Out the Invention

Specific description is made below on the best modes of the flame-retardant rubber composition, rubber product and covering material for electrical wire, of the present invention. However, the present invention is not restricted to the following modes because the present invention encompasses all modes having all features of the present invention.

### [1] Flame-retardant rubber composition

The flame-retardant rubber composition of the present invention comprises, as essential components, a synthetic rubber (a component A), a flame retardant (a component B), sulfur (a component C) and a polyfunctional monomer (a component D), at given proportions.

### [1-A] Synthetic rubber (Component A)

The flame-retardant rubber composition of the present invention comprises sulfur as a crosslinking agent in order to form a vulcanized rubber therefrom; therefore, the component A is required to have a recurring unit derived from a diene monomer. As long as such a requirement is satisfied, there is no particular restriction as to the kind of the synthetic rubber used as the component A; and there can be preferably used known synthetic rubbers such as EPDM, SBR, NBR and the like.

In particular, the component A is preferred, from the standpoint of wide use in industry, to be a synthetic rubber containing at least one member selected from the group consisting of an ethylene-α-olefin copolymer rubber, an unsaturated nitrile-conjugated diene rubber, a styrene-butadiene rubber and an acrylic rubber, and is more preferred to be a synthetic rubber composed of an ethylene-α-olefin copolymer rubber (a component A-1) and an unsaturated nitrile-conjugated diene rubber (a component A-2).

### [1-A-1] Ethylene-α-olefin copolymer rubber (component A-1)

As the component A-1, there can be mentioned, for example, random copolymers composed mainly of ethylene, an α-olefin of 3 to 10 carbon atoms and a non-conjugated diene, such as ethylene-propylene-non-conjugated diene terpolymer rubber (EPDM), ethylene-1-butene-non-conjugated diene terpolymer rubber and the like.

As the "α-olefin of 3 to 10 carbon atoms", there can be mentioned, for example, propylene, 1-butene, 1-pentene, 1-hexene, 1-heptene and 1-octene. Of these, propylene and 1-butene are preferred.

As the "non-conjugated diene", there can be mentioned, for example, 1,4-pentadiene, 1,4-hexadiene, 1,5-hexadiene, 1,7-octadiene, 1,9-decadiene, 3,6-dimethyl-1,7-octadiene, 4,5-dimethyl-1,7-octadiene, 5-methyl-1,8-nonadiene, dicyclopentadiene, 5-ethylidene-2-norbornene, 5-vinyl-2-norbornene and 2,5-norbornadiene. Of these, preferred are 1,4-hexadiene, dicyclopentadiene and 5-ethylidene-2-norbornene.

In the ethylene- α-olefin copolymer rubber, it is preferred that the content of ethylene-derived unit is less than 90 mole % and the content of α-olefin-derived unit is 10 mole % or more. A case wherein the content of ethylene-derived unit is 90 mole % or more and the content of α-olefin-derived unit is less than 10 mole %, is not preferred because the rubber may be inferior in flexibility. When the component A-1 contains a non-conjugated diene-derived unit, the content of the unit is ordinarily 3 to 10 mole % equivalent, preferably 3 to 8 mole % equivalent when the total moles of the ethylene-derived unit and the α-olefin-derived unit are taken as 100 mole %.

The Mooney viscosity [ML₁₊₄ (100°C)] of the ethylene-α-olefin copolymer is ordinarily 20 to 300, preferably 30 to 200, more preferably 30 to 150. A Mooney viscosity of less than 20 is not preferred because it results in a reduction in mechanical strength. Meanwhile, a Mooney viscosity of more than 300 is not preferred because it results in a reduction in processability such as processability of mixing during kneading, windability around roll, or the like. The iodine value of the ethylene-α-olefin copolymer is ordinarily 40 or less, preferably 5 to 30, more preferably 7 to 20. An iodine value of more than 40 is not preferred because it invites a higher cost and there is a high possibility of no rubber elasticity of material. The crystallinity of the ethylene-α-olefin copolymer as measured by X-ray diffraction is ordinarily 20% or less, preferably 15% or less. A crystallinity of more than 20% is not preferred because it tends to lower the flexibility of rubber.

There is no particular restriction as to the polymerization method for production of the component A-1. The component A-1 can be produced by, for example, polymerization in the presence of a known catalyst such as vanadium-based catalyst, titanium-based catalyst, metallocene-based catalyst or the like. Specifically explaining, when a vanadium-based catalyst is used, there can be used a method of polymerizing ethylene, an α-olefin and, optionally, a non-conjugated diene in the presence of a catalyst comprising at least one kind of solvent-soluble vanadium compound and at least one kind of organic aluminum compound. In this case, the polymerization may be conducted while hydrogen, as a molecular weight modifier, is fed as necessary. The polymerization can be carried out by any of a vapor phase method (using a fluidized bed or a stirring bed) and a liquid phase method (a slurry method or a solution method).

As the "solvent-soluble vanadium compound", there is preferably used a reaction product between an alcohol and at least one member selected from the group consisting of VOCl₃, VCl₄, VOCl₃ and VCl₄. Here, as the "alcohol", there can be mentioned, for example, methanol, ethanol, n-propanol, isopropanol, n-butanol, sec-butanol, tert-butanol, n-hexanol, n-octanol, 2-ethylhexanol, n-decanol and n-dodecanol. Of these, an alcohol of 3 to 8 carbon atoms is preferably used.

As the "organic aluminum compound", there can be mentioned, for example, triethyl aluminum, triisobutyl aluminum, tri-n-hexyl aluminum, diethyl aluminum monochloride, diisobutyl aluminum monochloride, ethyl aluminum sesquichloride, butyl aluminum sesquichloride, ethyl aluminum dichloride, butyl aluminum dichloride, and methylaluminoxane which is a reaction product between trimethyl aluminum and water. Of these, there are preferably used ethyl aluminum sesquichloride, butyl aluminum sesquichloride, a mixture of ethyl aluminum sesquichloride and triisobutyl aluminum, and a mixture of triisobutyl aluminum and butyl aluminum sesquichloride.

As the "solvent" for dissolving the vanadium compound, there is used a hydrocarbon solvent ordinarily, and there are preferably used, in particular, n-pentane, n-hexane, n-heptane, n-octane, isooctane, cyclohexane, etc. These hydrocarbon solvents can be used singly or in admixture of two or more kinds.

The ethylene-α-olefin copolymer rubber of the present invention may be an oil-extended polymer containing a softening agent described later added at the time of polymerization.

### [1-A-2] Unsaturated nitrile-conjugated diene rubber

### (component A-2)

As the component A-2, there can be mentioned an unsaturated nitrile-conjugated diene copolymer rubber; a copolymer rubber between unsaturated nitrile, conjugated diene and polar group-containing copolymerizable monomer other than unsaturated nitrile; etc.

As the "unsaturated nitrile", there can be mentioned, for example, acrylonitrile, methacrylonitrile, α-ethylacrylonitrile, α-isopropylacrylonitrile, α-chloroacrylonitrile, α-fluoroacrylonitrile and ethacrylonitrile. Of these, acrylonitrile is preferred.

As the "conjugated diene", there can be mentioned, for example, butadiene, isoprene, 1,3-hexadiene, 2,3-dimethylbutadiene, 2-trimethoxysilyl-1,3-butadiene, 1,3-pentadiene and 2,4-dimethyl-1,3-butadiene. Of these, butadiene and isoprene are preferred. These conjugated dienes may be used singly or in admixture of two or more kinds.

As the "polar group-containing copolymerizable monomer other than unsaturated nitrile", there can be mentioned, for example, methyl acrylate, ethyl acrylate, n-propyl acrylate, isopropyl acrylate, n-butyl acrylate, tert-butyl acrylate, sec-butyl acrylate, 2-methylbutyl acrylate, 3-methylbutyl acrylate, n-hexyl acrylate, n-heptyl acrylate, n-octyl acrylate, 2-ethylhexyl acrylate,

acrylamide, N-hydroxymethyl(meth)acrylamide, N-(2-hydroxyethyl)(meth) acrylamide, N,N-bis(2-hydroxyethyl)(meth)acrylamide, 2-hydroxyethyl (meth)acrylate, 2-hydroxypropyl (meth)acrylate, 2-hydroxyethyl crotonate, 2-hydroxypropyl crotonate, 2-hydroxyethyl cinnamate, 2-hydroxypropyl cinnamate, allyl alcohol, o-hydroxystyrene, m-hydroxystyrene, p-hydroxystyrene, ethylene glycol mono(meth)acrylate,

propylene glycol mono(meth)acrylate, vinylamine, allylamine, o-aminostyrene, m-aminostyrene, p-aminostyrene, 2-aminoethyl (meth)acrylate, 2-aminopropyl (meth)acrylate, glycidyl (meth)acrylate, allyl glycidyl ether, acrolein, vinyl methyl ketone, divinyl phthalate, diallyl phthalate, N,N-methylenebis(meth)acrylamide, N,N-ethylenebis(meth)acrylamide, N,N-hexamethylenebis(meth)acrylamide, (meth)acrylic acid, crotonic acid, cinnamic acid, itaconic acid, maleic acid, fumaric acid, citraconic acid, mesaconic acid,

2-hydroxyethyl (meth)acrylate, 2-hydroxybutyl methacrylate, 2-hydroxyethyl (meth)acrylate, 2-hydroxybutyl (meth)acrylate, 2-hydroxypropyl (meth)acrylate, dimethylaminoethyl (meth)acrylate, diethylaminoethyl (meth)acrylate, ω-carboxy-polycaprolactone mono(meth)acrylate, tetrahydrofurfuryl acrylate, di(meth)acrylate of polyalkylene glycol (unit number of alkylene glycol is about 2 to 23) of polyethylene glycol, and di(meth)acrylate of polyalkylene glycol (unit number of alkylene glycol is about 2 to 23) of polypropylene glycol.

Of these, preferred are acrylic acid, ethyl acrylate, n-butyl acrylate, t-butyl acrylate and s-butyl acrylate. These copolymerizable monomers may be used singly or in admixture of two or more kinds.

In the unsaturated nitrile-conjugated diene rubber, the content of conjugated diene-derived unit is ordinarily 15 to 65 mass %, preferably 20 to 50 mass %. A content of less than 15 mass % is not preferred because it tends to result in a reduction in rubber elasticity. Meanwhile, a content of more than 65 mass % is not preferred because, when magnesium hydroxide is used as a flame retardant, the compatibility between rubber and magnesium hydroxide becomes poor and the resulting rubber composition tends to be low in mechanical strength.

The content of the unsaturated nitrile-derived unit is preferably 33 to 70 mass %, more preferably 40 to 60 mass %. A content of less than 33 mass % is not preferred because, when magnesium hydroxide is used as a flame retardant, the compatibility between rubber and magnesium hydroxide becomes poor and the resulting rubber composition tends to be low in mechanical strength. Meanwhile, a content of more than 70 mass % is not preferred because there may be a reduction in rubber elasticity.

When there is present the unit derived from the polar group-containing monomer other than the unsaturated nitrile, its content is ordinarily 0 to 60 mass %, preferably 0 to 50 mass %. A content of more than 60 mass % is not preferred because a reduction in rubber elasticity is likely to arise.

As to the polymerization method for production of the component A-2, there is no particular restriction. There can be mentioned, for example, radical polymerization and anionic polymerization. As the radical polymerization, there can be mentioned bulk polymerization, suspension polymerization, emulsion polymerization, etc. Particularly preferred is emulsion polymerization which can yield a stable emulsion and suspension at the completion of polymerization. As the method for emulsion polymerization, there can be mentioned, for example, a method which comprises emulsifying a mixture of monomers of given proportions in an aqueous medium in the presence of an emulsifier, initiating polymerization using a radical polymerization initiator, and, when an intended conversion of polymerization has been reached, terminating the polymerization using a shortstop.

As the emulsifier, there can be mentioned an anionic surfactant, a nonionic surfactant, a cationic surfactant, an amphoteric surfactant, etc. However, there is widely used an anionic surfactant such as long chain fatty acid salt having 10 or more carbon atoms, rhodinic acid salt or the like. Specifically, there can be preferably used, for example, a potassium or sodium salt of capric acid, lauric acid, myristic acid, palmitic acid, oleic acid or stearic acid. These emulsifiers may be used singly or in admixture of two or more kinds.

As the "radical polymerization initiator", there can be used organic peroxides such as benzoyl peroxide, lauroyl peroxide, tert-butyl hydroperoxide, cumene hydroperoxide, paramenthane hydroperoxide, di-tert-butyl peroxide, dicumyl peroxide and the like. There can also be used a diazo compound typified by azobisisobutyronitrile; an inorganic peroxide typified by potassium persulfate; a redox type catalyst typified by a combination of such a peroxide and ferric sulfate; and so forth. These radical polymerization initiators may be used singly or in admixture of two or more kinds.

A chain transfer agent may be used in order to control the molecular weight of the component A-2. As the "chain transfer agent", there can be used alkylmercaptans such as tert-dodecylmercaptan, n-dodecylmercaptan and the like; carbon tetrachloride; a thioglycol; diterpene,; terpinolene; γ-terpinene; etc.

In production of the component A-2 by polymerization, monomers, an emulsifier, a radical polymerization initiator, a chain transfer agent, etc. may be fed into a reactor all together to initiate polymerization; or, they may be fed continuously or intermittently during the reaction. The polymerization is preferably conducted in an oxygen-free atmosphere ordinarily at 0 to 100°C, preferably 0 to 80°C. The reaction conditions such as temperature, stirring and the like may be changed as necessary in the course of the reaction. The polymerization may be conducted continuously or batchwise.

The termination of the polymerization is generally conducted by adding a shortstop when an intended conversion of polymerization has been reached. As the shortstop, there are used, for example, amine compounds such as hydroxylamine, diethylhydroxylamine and the like, and quinone compounds such as hydroquinone and the like. After the termination of the polymerization, unreacted monomers are as necessary removed from the reaction system by means of steam distillation or the like and the latex is solidified, whereby a component A-2 can be obtained.

There is no particular restriction as to the molecular weight of the component A-2. However, the Mooney viscosity [ML₁₊₄ (100°C)] of the component A-2 is preferably 20 to 200. A Mooney viscosity of less than 20 is not preferred because it results in a reduction in mechanical strength. Meanwhile, a Mooney viscosity of more than 200 is not preferred because it results in reduced processability such as kneadability, etc.

When the component A is composed of an ethylene-α-olefin copolymer rubber (a component A-1) and an unsaturated nitrile-conjugated diene rubber (a component A-2), the ratio of the component A-1 and the component A-2 is preferably 5:95 to 85:15. When the amount of the component A-1 is less than 5 parts by mass when the total mass of the component A-1 and the component A-2 is taken as 100 parts by mass, such an amount of the component A-1 is not preferred because there tends to occur degradation in weather resistance. Meanwhile when the amount of the component A-1 is more than 85 parts by mass, such an amount of the component A-1 is not preferred because both flame retardancy and oil resistance may be inferior.

### [1-B] Flame retardant (component B)

As the "flame retardant", there are known, for example, antimony-based flame retardants such as antimony trioxide, antimony pentoxide and the like; zinc-based flame retardants such as zinc borate, zinc sulfate, zinc stannate and the like; phosphorus-based flame retardants such as triphenyl phosphate, cresyl diphenyl phosphate, phenyl resorcin polyphosphate, bisphenol-A-bis(diphenyl phosphate), bisphenol-A-bis(dicresyl phosphate) and the like; and metal hydroxide flame retardants such as aluminum hydroxide, magnesium hydroxide and the like. In the present invention, use of metal hydroxide flame retardant, particularly magnesium hydroxide is preferred.

As the metal hydroxide flame retardant, there is preferred one which is good at crystal growth and low in coagulation. Specifically, there is preferred a metal hydroxide which has a BET specific surface area of 20 m²/g or less, preferably 3 to 10 m²/g and an average secondary particle diameter of 0.2 to 5 µm, preferably 0.5 to 3 µm. The metal hydroxide may be any of a synthetic product and a natural product as long as the above requirements are satisfied. For example, a synthetic magnesium hydroxide is obtained by contacting magnesium chloride (or magnesium nitrate) with ammonia (or potassium hydroxide) in an aqueous medium under such conditions as they can be contacted sufficiently, and then heating the system under pressure. However, a natural product is preferred from the standpoint of cost because it is inexpensive as compared with a synthetic product.

The metal hydroxide may be surface-treated with a fatty acid (e.g. stearic acid, oleic acid, palmitic acid, lauric acid or arachidic acid) or its metal salt; a paraffin wax, a polyethylene wax, or a modification product thereof; an organic metal compound such as organic boran, organic titanate or the like; a silane coupling agent; and so forth. Particularly, a metal hydroxide surface-treated with a silane coupling agent, or a combination use of a metal hydroxide and a silane coupling agent is preferred because it gives a striking improvement in tensile strength of rubber.

When the metal hydroxide is treated with a silane coupling agent, the amount of the silane coupling agent added to the metal hydroxide is ordinarily 0.1 to 3 parts by mass, preferably 0.3 to 1 part by mass relative to 100 parts by mass of the metal hydroxide. An amount of less than 0.1 part by mass is not preferred because the coagulation of metal hydroxide is strong and the dispersibility of metal hydroxide in rubber composition tends to be inferior. An amount of more than 3 parts by mass is not preferred from the standpoint of cost because there is no improvement in dispersibility.

For the surface treatment of metal hydroxide with silane coupling agent, there can be used a known dry method or a known wet slurry method. The surface treatment may also be conducted by adding a metal hydroxide and a silane coupling agent to a rubber composition, followed by mixing.

As the "silane coupling agent", there can be mentioned, for example, vinyltrimethoxysilane, vinyltriethoxysilane, vinyltris (β-methoxyethoxy) silane, vinyltrichlorosilane, vinyltriacetoxysilane, N-(β-aminoethyl)-γ-aminopropyltrimethoxysilane, γ-aminopropyltriethoxysilane, γ-glycidoxypropyltrimethoxysilane, γ-glycidoxypropylmethyldimethoxysilane, β-(3,4-epoxycyclohexyl)ethyltrimethoxysilane, γ-methacryloxypropyltrimethoxysilane, γ-methacryloxypropyltris(β-methoxyethoxy) silane, γ-mercaptopropyltrimethoxysilane, methyltrimethoxysilane, methyltriethoxysilane, hexamethyldisilazane, γ-anilinopropyltrimethoxysilane, and N-[β-(N-vinylbenzalamino)ethyl]-γ-aminopropyltrimethoxysilane hydrochloride.

When the metal hydroxide is surface-treated with a higher fatty acid or an alkali metal salt thereof, the surface treatment can be conducted by a dry method by spraying, on a metal hydroxide, a higher fatty acid (or an alkali metal salt thereof) melted at high temperature or dissolved in a solvent, followed by mixing using a Henschel mixer or the like. The surface treatment is also possible by adding, to a rubber composition, a metal hydroxide and a higher fatty acid (or an alkali metal salt thereof), followed by mixing.

The amount of the higher fatty acid or the alkali metal salt thereof, added to the metal hydroxide may be such an amount that can cover 10 to 80%, preferably 15 to 50% of the total specific surface area of the metal hydroxide as measured by the BET method.

The content of the component B is 10 to 200 parts by mass, preferably 30 to 150 parts by mass relative to 100 parts by mass of the component A. A content of less than 10 parts by mass is not preferred because no sufficient flame retardancy may be obtained. Meanwhile, a content of more than 200 parts by mass is not preferred because there is a striking reduction in mechanical strength.

### [1-C] Sulfur (component C)

Sulfur acts mainly as a crosslinking agent for the component A. As such sulfur, there can be mentioned, for example, powder sulfur, precipitated sulfur, colloidal sulfur, surface-treated sulfur and insoluble sulfur. The content of the component C is 0.1 to 15 parts by mass, preferably 0.1 to 10 parts by mass, more preferably 0.5 to 5 parts by mass relative to 100 parts by mass of the component A. A content less than 0.1 part by mass is not preferred because there may be no crosslinking reaction. Meanwhile, a content of more than 15 parts by mass is not preferred because excessive crosslinking takes place, which may result in loss of rubber elasticity.

Incidentally, there may be used, in combination with sulfur, a sulfur-containing compound which releases sulfur at the temperature of crosslinking. As such a sulfur-containing compound, there can be mentioned, for example, sulfur chloride, sulfur dichloride, high-molecular polysulfide, morpholine disulfide, alkylphenol disulfide, tetramethylthiuram disulfide, dipentamethylenethiuram tetrasulfide and selenium dimethyldithiocarbamate.

### [1-D] Polyfunctional monomer (component D)

In the present specification, "polyfunctional polymer" means a monomer having two or more polymerizable functional groups in the molecule. For example, a polyfunctional acrylate compound or a polyfunctional isocyanate compound can be used preferably. Specifically, there can be mentioned ethylene dimethacrylate, polyethylene glycol dimethacrylate, trimethylpropane trimethacrylate, cyclohexyl methacrylate, divinylbenzene, triallyl isocyanate, triallyl cyanurate, trimethallyl isocyanate, diallyl phthalate, vinyltoluene, triallyl phosphine, etc. These polyfunctional monomers may be used singly or in admixture of two or more kinds.

The component D is preferably a polyfunctional monomer which is liquid at normal temperature (25°C). The polyfunctional monomer which is liquid at normal temperature, is preferred in that it can give a rubber composition of low viscosity. As such a polyfunctional monomer, there can be mentioned trimethylpropane trimethacrylate (for example, Hi-Cross M (trade name), a product of Seiko Chemical Co., Ltd.).

The content of the component D is 3 to 30 parts by mass, preferably 4 to 25 parts by mass, particularly preferably 5 to 20 parts by mass, relative to 100 parts by mass of the component A. A content of less than 3 parts by mass is not preferred because improvements in properties are small and satisfactory mechanical strength may not be obtained. Meanwhile, a content of more than 30 parts by mass is not preferred because there may be a reduction in flame retardancy.

Incidentally, when the crosslinking agent used is a peroxide, the polyfunctional monomer is used as a co-crosslinking agent for the peroxide, in some cases. In the present invention, however, it was found that when, in using sulfur as a crosslinking agent, the above-mentioned polyfunctional monomer is compounded in an amount far larger (about 3 to 30 parts by mass relative to 100 parts by mass of synthetic rubber) than the amount (ordinarily, about 0.1 to 2 parts by mass relative to 100 parts by mass of synthetic rubber) compounded when a peroxide is used as a crosslinking agent, there can be obtained a rubber composition improved in mechanical strength.

### [1-E] Silica (component E)

The flame-retardant rubber composition of the present invention is preferred to further contain silica (a component E), besides the above-mentioned essential components. Silica is preferred in that it acts as a reinforcing agent and a filler and also is effective, together with the component D, in improvement in mechanical strength, particularly tensile strength at break. A wet silica, a dry silica, etc. can be used preferably.

The content of the component E is 2 to 100 parts by mass, preferably 10 to 50 parts by mass relative to 100 parts by mass of the component A. A content of less than 2 parts by mass is not preferred because no reinforcement effect may be obtained. Meanwhile, a content of more than 100 parts by mass is not preferred because the compound obtained may have too high a viscosity.

A known filler may be used together with silica. As the known filler, there can be mentioned, for example, heavy calcium carbonate, chalk, light calcium carbonate, ultrafine activated calcium carbonate, special calcium carbonate, basic magnesium carbonate, kaolin clay, fired clay, pyrophillite clay, silane-treated clay, synthetic calcium silicate, synthetic magnesium silicate, synthetic aluminum silicate, magnesium carbonate, aluminum hydroxide, magnesium hydroxide, magnesium oxide, kaolin, sericite, talc, fine powder talc, wollastonite, zeolite, xonotlite, asbestos, PMF (processed mineral fiber), sepiolite, potassium titanate, ellestadite, gypsum fiber, glass balloon, silica balloon, hydrotalcite, fly ash balloon, shirasu balloon, carbon-based balloon, alumina, barium sulfate, aluminum sulfate, calcium sulfate and molybdenum disulfide. These fillers may be used singly or in admixture of two or more kinds.

### [1-F] Other components

In the flame-retardant rubber composition of the present invention, there are compounded, besides the above-mentioned components, additives, for example, a crosslinking co-agent and a plasticizer. Besides, there can be compounded, in appropriate amounts, a carbon black reinforcing agent, a metal oxide, a softening agent, an anti-oxidant, a processing aid, etc.

As specific examples of the crosslinking accelerator, there can be mentioned sulfenamide compounds such as N-cyclohexyl-2-benzothiazolylsulfenamide, N-oxydiethylene-2-benzothiazolylsulfenamide, N,N-diisopropyl-2-benzothiazolylsulfenamide and the like; thiazole compounds such as 2-mercaptobenzothiazole, 2-(2',4'-dinitrophenyl)mercaptobenzothiazole, 2-(4'-morpholinodithio)benzothiazole, dibenzothiazyl disulfide and the like; guanidine compounds such as diphenylguanidine, diorthotolylguanidine, diorthonitrilguanidine, orthonitril biguanide, diphenylguanidine phthalate and the like;

aldehydeamine or aldehyde-ammonia compounds such as acetaldehyde-aniline reaction product, butylaldehyde-aniline condensation product, hexamethylenetetramine, acetaldehyde ammonia and the like; imidazoline compounds such as 2-mercaptoimidazoline and the like; thiourea compounds such as thiocarbanilide, diethylthiourea, dibutylthiourea, trimethylthiourea, diorthotolylthiourea and the like; thiuram compounds such as tetramethylthiuram monosulfide, tetramethylthiuram disulfide, tetraethylthiuram disulfide, tetrabutylthiuranm disulfide, pentamethylenethiuram tetrasulfide and the like; dithioacid salt compounds such as zinc dimethyldithiocarbamate, zinc diethyldithiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate, tellurium dimehtyldithiocarbamate and the like; xanthate compounds such as zinc dibutylxanthogenate and the like; and zinc oxide.

As the plasticizer, there can be mentioned phthalic acid esters such as dimethyl phthalate, diethyl phthalate, dibutyl phthalate, diisobutyl phthalate, dioctyl phthalate, butyl octyl phthalate, di-(2-ethylhexyl) phthalate, diisooctyl phthalate, diisodecyl phthalate and the like; fatty acid esters such as dimethyl adipate, diisobutyl adipate, di(2-ethylhexyl) adipate, diisooctyl adipate, diisodecyl adipate, octyl decyl adipate, di(2-ethylhexyl) azelate, diisooctyl azelate, diisobutyl azelate, dibutyl sebacate, di(2-ethylhexyl) sebacate, diisooctyl sebacate and the like;

trimellitic acid esters such as isodecyl trimellitate, octyl trimellitate, n-octyl trimellitate, isononyl trimellitate and the like; di(2-ethylhexyl) fumarate; diethylene glycol monooleate; glycerine monoricinolate; trilauryl phosphate; tristearyl phosphate; tri(2-ethylhexyl) phosphate; epoxidized soybean oil; polyetherester; etc.
These plasticizers may be used singly or in admixture of two or more kinds. Also, the plasticizer may be dispersed beforehand in the unsaturated nitrile-conjugated diene rubber.

As the carbon black reinforcing agent, there can be mentioned, for example, SAF carbon black, ISAF carbon black, HAF carbon black, FEF carbon black, GPF carbon black, SRF carbon black, FT carbon black, MT carbon black, acetylene carbon black and Ketjen black. These reinforcing agents may be used singly or in admixture of two or more kinds.

As the metal oxide, there can be mentioned, for example, zinc oxide, active zinc oxide, surface-treated zinc oxide, zinc carbonate, complex zinc oxide, compound active zinc oxide, surface-treated magnesium oxide, magnesium oxide, calcium hydroxide, ultrafine calcium hydroxide, lead monoxide, red lead and white lead. These metal oxides may be used singly or in admixture of two or more kinds.

As the softening agent, there can be mentioned, for example, a petroleum-based softening agent, a vegetable oil-based softening agent and a factice. As the petroleum-based softening agent, there can be mentioned softening agents of aromatic type, naphthenic type, paraffinic type, etc.; as the vegetable oil-based softening agent, there can be mentioned castor oil, cotton seed oil, linseed oil, rape seed oil, soybean oil, palm oil, coconut oil, peanut oil, Japan wax, etc; as the factice, there can be mentioned brown factice, white factice, semi-translucent factice, etc.

As the anti-oxidant, there can be mentioned, for example, anti-oxidants of naphthylamine type, diphenylamine type, p-phenylenediamine type, quinoline type, hydroquinone derivative type, (mono, bis, tris or poly)phenol type, thiobisphenol type, hindered phenol type, phosphorous acid ester type, imidazole type, nickel dithiocarbamate type and phosphoric acid type. These anti-oxidants may be used singly or in admixture of two or more kinds.

As the processing aid, there can be mentioned, for example, stearic acid, oleic acid, lauric acid, zinc stearate, calcium stearate, potassium stearate, sodium stearate and stearylamine. These anti-oxidants may be used singly or in admixture of two or more kinds.

In the flame-retardant rubber composition of the present invention, a rubber component other than the component A may be compounded. As such a rubber component, there can be used, for example, a styrene-butadiene copolymer rubber, a butadiene rubber, an isoprene rubber, a butadiene-isoprene copolymer rubber, a butadiene-styrene-isoprene copolymer rubber, an acrylic rubber, a butyl rubber, a natural rubber or a chloroprene rubber.

### [2] Rubber product

The flame-retardant rubber composition of the present invention can be made into a rubber product by, for example, the following method. First, the flame-retardant rubber composition of the present invention, a rubber component other than the component A, a filler, a carbon black reinforcing agent, a softening agent and other compounding agents are kneaded at 70 to 180°C using a kneader such as Banbury mixer or the like. Then, the kneaded material is cooled. Therein are compounded sulfur, a crosslinking accelerator, etc. using a Banbury mixer, a mixing roll or the like, followed by molding into an intended shape. Next, the molded material is crosslinked at 130 to 200°C by steam cure or pressing cure to obtain a rubber product made of a vulcanized rubber.

### [3] Covering material for electrical wire

The vulcanized rubber obtained by subjecting the flame-retardant rubber composition to steam cure has a tensile strength at break of 13 MPa or more which is comparable to that of chloroprene rubber heretofore used as a covering material for electrical wire. Therefore, the vulcanized rubber can be preferably used as a substitute for chloroprene rubber and can be used as a halogen-free covering material for electrical wire.

### Examples

The flame-retardant rubber composition of the present invention is described more specifically below by way of Examples. However, since these Examples reflect only part of the embodiments of the present invention, the present invention should not be interpreted based only on these Examples.

### [Measurements and evaluations]

The flame-retardant rubber compositions of Examples and Comparative Examples were subjected to the following tests and the test results were evaluated as follows.

### (1) Mooney viscosity

Measurement was made according to JIS K 6300-1, and evaluation was made based on the following yardstick. Incidentally, the condition of measurement was ML₁₊₄ (125°C).
O: A Mooney viscosity of 50 or less (good)
X: A Mooney viscosity of more than 50 (poor)

### (2) Tensile strength at break (T_{B})

Measurement was made according to JIS C 3005 which is cited in JIS C 3327, and evaluation was made based on the following yardstick, referring to the requirement (13 MPa or more) for the sheath tensile strength of chloroprene rubber.
O: A tensile strength at break of 13 MPa or more (good)
X: A tensile strength at break of less than 13 MPa (poor)

### (3) Tensile elongation at break (E_{B})

Measurement was made according to JIS K 6251, and evaluation was made based on the following yardstick.
O: A tensile elongation at break of 300% or more (good)
X: A tensile elongation at break of less than 300% (poor)

### (4) Hardness (H_{A})

Durometer A hardness as an index of flexibility was measured according to JIS K 6253, and evaluation was made based on the following yardstick.
O: A durometer A hardness of 85 or less (good)
X: A durometer A hardness of more than 85 (poor)

### (5) Flame retardancy (LOI)

Measurement was made according to JIS K 6269, and evaluation was made based on the following yardstick.
O: An oxygen index of 26 or more (good)
X: An oxygen index of less than 26 (poor)

### [Example 1]

30 parts by mass of an ethylene-propylene copolymer [EPDM, EP 33 (trade name), a product of JSR, ML (100°C): 45] as Component A-1, 70 parts by mass of an acrylonitrile-butadiene rubber [NBR, N217SH (trade name), a product of JSR, acrylonitrile unit content: 47] as Component A-2, 55 parts by mass of a wax-treated, natural magnesium hydroxide [Magnesium Hydroxide W-W3 (trade name), a product of Konoshima Chemical Co., volume-average particle diameter: 2.5 µm, specific surface area: 8.9 cm²/g] as Component B, 10 parts by mass of trimethylpropane trimethacrylate [Hi-Cross M (trade name), a product of Seiko Chemical Co., Ltd.] as Component D, 20 parts by mass of wet silica [Tokusil GU (trade name), a product of TOKUYAMA CORPORATION] as Component E,

15 parts by mass of MAF carbon black [Seast G116HM, a product of Tokai Carbon Co., Ltd.] As Carbon black reinforcing agent, 5 parts by mass of active zinc oxide [Active Zinc Oxide Azo (trade name), a product of Seido Chemical Industry Co., Ltd.] as Metal oxide, 1 part by mass of stearic acid [Lunac S-30 (trade name), a product of Kao Corporation] as Processing aid, 1 part by mass of γ-methacryloxypropyltrimethoxysilane [TSL 8370 (trade name), a product of GE Toshiba Silicones LLC] as Silane coupling agent were kneaded at 100 to 150°C for 5 minutes using a Banbury mixer (Model: 1.7 BB2, a product of Kobe Steel, Ltd.) to prepare a compound.

To the compound were added 2 parts by mass of powder sulfur [Sulfax PMC (trade name), a product of Tsurumi Chemical Industry Co., Ltd.] as a component C and 4 parts by mass of a vulcanization accelerator [NOCCELER EP-60 (trade name), a product of Ouchi Shinko Chemical Industrial Co., Ltd.], followed by kneading at 80°C for 10 minutes using a 10-inch open roll (a product of Kansai Roll, Co., ltd.), to prepare a flame-retardant rubber composition. This composition was measured for Mooney viscosity.

The flame-retardant rubber composition was molded into a flat sheet using an extruder (50 mm in diameter). The flat sheet was subjected to direct steam cure at 150°C for 45 minutes to obtain a vulcanized rubber. The vulcanized rubber having an increased thickness owing to vulcanization shrinkage, etc. was polished using a grinder so as to have a uniform thickness of about 2 mm, whereby a sheet-shaped test sample was produced. This test sample was measured for physical properties. The results are shown in Table 1.

Separately, the flame-retardant rubber composition was subjected to pressing cure at 170°C for 20 minutes using a mold for sheet production (15 cm x 15 cm x 0.2 cm) and a press molding machine to obtain a vulcanized rubber. This was used as a sheet-shaped test sample of 2 mm in thickness. This test sample was measured for physical properties. The results are shown in Table 1.

**Table 1**

| | | Ex. 1 | Ex. 2 | Ex. 3 | Ex. 4 | Ex. 5 | Ex. 6 | Comp. Ex. 1 | Comp. Ex. 2 | Comp. Ex. 3 |
|---|---|---|---|---|---|---|---|---|---|---|
| (Component A-1) Ethylene-α-olefin copolymer rubber | | | 30.0 | 30.0 | 30.0 | 50.0 | 30.0 | | 30.0 | 30.0 |
| (Component A-2) Unsaturated nitrile-conjugated diene rubber | | 100.0 | 70.0 | 70.0 | 70.0 | 50.0 | 70.0 | 100.0 | 70.0 | 70.0 |
| (Component B) Flame retardant | | 55.0 | 55.0 | 75.0 | 55.0 | 55.0 | 55.0 | 75.0 | 75.0 | 55.0 |
| (Component E) Silica | | 20.0 | 20.0 | | 20.0 | 20.0 | 20.0 | | | 20.0 |
| (Component C) Sulfur | | 2.0 | 2.0 | 2.0 | 2.0 | 2.0 | 2.0 | 2.0 | 2.0 | 2.0 |
| (Component D) Polyfunctional monomer | | 10.0 | 10.0 | 10.0 | 5.0 | 10.0 | 20.0 | | | 35.0 |
| Carbon black reinforcing agent | | 15.0 | 15.0 | 15.0 | 15.0 | 15.0 | 15.0 | 15.0 | 15.0 | 15.0 |
| Plasticizer / Dioctyl adipate | | | | | 5.0 | | | 5.0 | 5.0 | |
| Metal oxide | | 5.0 | 5.0 | 5.0 | 5.0 | 5.0 | 5.0 | 5.0 | 5.0 | 5.0 |
| Processing aid / Stearic acid | | 1.0 | 1.0 | 1.0 | 1.0 | 1.0 | 1.0 | 1.0 | 1.0 | 1.0 |
| Silane coupling agent | | 1.0 | 1.0 | 1.0 | 1.0 | 1.0 | 1.0 | 1.0 | 1.0 | 1.0 |
| Vulcanization accelerator | | 4.0 | 4.0 | 4.0 | 4.0 | 4.0 | 4.0 | 4.0 | 4.0 | 4.0 |
| Total parts | | 213.0 | 213.0 | 213.0 | 213.0 | 213.0 | 223.0 | 208.0 | 208.0 | 238.0 |
| Flame-retardant rubber composition /unvulcanized rubber Mooney viscosity:ML₁₊₄ (125°C) | | 45/○ | 31/○ | 22/○ | 30/○ | 28/○ | 21/○ | 47/○ | 31/○ | 12/○ |
| Rubber properties after direct steam cure (150 °C × 45 minutes) | | | | | | | | | | |
| | Tensile strength at break:(TB) (MPa) | 17.9/○ | 15.5/○ | 131.1/○ | 13.1/○ | 14.0/○ | 16.3/○ | 10.8/X | 8.4/X | 15.5/○ |
| | Tensile elongation at break: (E_{B}) (%) | 450/○ | 460/○ | 490/○ | 440/○ | 520/○ | 420/○ | 555/○ | 490/○ | 460/○ |
| | hardness (Durometer A hardness) : H_{A} | 82/○ | 78/○ | 72/○ | 77/○ | 78/○ | 78/○ | 72/○ | 70/○ | 78/○ |
| Rubber properties after pressing cure (170°C X 20 minutes) | | | | | | | | | | |
| | Tensile strength at break:(T_{B}) (MPa) | 24.5/○ | 18.4/○ | 17.5/○ | 17.1/○ | 17.0/○ | 18.6/○ | 17.1/○ | 10.5/X | 18.4/0 |
| | Tensile elongation at break:(E_{B}) (%) | 500/○ | 500/○ | 550/○ | 530/○ | 540/○ | 490/○ | 560/○ | 510/○ | 520/○ |
| | hardness (Durometer A hardness): H_{A} | 79/○ | 73/○ | 69/○ | 72/○ | 73/○ | 74/○ | 73/○ | 70/○ | 74/○ |
| | Flame retardancy (oxygen indexl:LOI (O₂ %) | 27/○ | 27/○ | 28/○ | 27/○ | 27/○ | 26/○ | 28/○ | 28/○ | 25/X |

### [Examples 2 to 6, Comparative Examples 1 to 3]

Flame-retardant rubber compositions were prepared in the same manner as in Example 1, in the formulations shown in Table 1. From the rubber compositions were produced test samples each made of a vulcanized rubber. The test samples were measured for physical properties. The results are shown in Table 1.

### [Evaluation results]

The followings are clear from the results shown in Table 1. The flame-retardant rubber compositions of Examples 1 to 6 are excellent in mechanical properties, particularly in tensile strength at break. Specifically explaining, they could give a fully satisfactory tensile strength at break (13 MPa or higher), even when subjected to steam cure generally regarded to be incapable of impart a strength. In particular, the flame-retardant rubber compositions of Examples 1, 2 and 6 imparted a tensile strength at break exceeding 15 MPa, even when subjected to steam cure and showed extremely good results. When the flame-retardant rubber compositions of Examples 1 to 6 were subjected to pressing cure, as compared with when subjected to steam cure, there was seen a striking increase in mechanical properties, particularly in tensile strength at break. Meanwhile, the flame-retardant rubber compositions of Comparative Examples 1 to 2 could not impart a fully satisfactory tensile strength at break (13 MPa or higher) when subjected to steam cure. Comparative Example 3 is excellent in mechanical properties, but is poor in flame retardancy and has a low oxygen index (LOI) of 25.

### Industrial Applicability

The flame-retardant rubber composition of the present invention has excellent flame retardancy and, therefore, can be used in many applications such as roll for copying machine, printer or the like, belt, sealing material, insulation tape, hose (requiring flame retardancy, oil resistance, etc.), seal for construction material, and the like. Further, the flame-retardant rubber composition of the present invention is excellent in mechanical properties, particularly in tensile strength at break and, therefore, can be preferably used particularly as a covering material for wiring of apparatus inside, vehicle harness, etc.

## Claims

1. A flame-retardant rubber composition comprising, as essential components, a synthetic rubber (a component A), a flame-retardant (a component B), sulfur (a component C) and a polyfunctional monomer (a component D), wherein an amount of the component B is 10 to 200 parts by mass, an amount of the component C is 0.1 to 15 parts by mass and an amount of the component D is 3 to 30 parts by mass, all relative to 100 parts by mass of the component A, the flame-retardant rubber composition further comprising a crosslinking accelerator.

2. A flame-retardant rubber composition according to claim 1, which further comprises silica (a component E) and wherein an amount of the component E is 2 to 100 parts by mass relative to 100 parts by mass of the component A.

3. A flame-retardant rubber composition according to claim 1 or 2, wherein the component A is a synthetic rubber containing at least one member selected from the group consisting of an ethylene-α-olefin copolymer rubber, an unsaturated nitrile-conjugated diene rubber, a styrene-butadiene rubber and an acrylic rubber.

4. A flame-retardant rubber composition according to any one of claims 1 to 3, wherein the component A comprises, as components, an ethylene-α-olefin copolymer rubber (a component A-1) and an unsaturated nitrile-conjugated diene rubber (a component A-2) and the ratio of the component A-1 and the component A-2 is 5:95 to 85:15.

5. A flame-retardant rubber composition according to any one of claims 1 to 4, wherein the component B is magnesium hydroxide.

6. A flame-retardant rubber composition according to any one of claims 1 to 5, wherein the component D is a polyfunctional acrylate compound or a polyfunctional isocyanate compound.

7. A flame-retardant rubber composition according to any one of claims 1 to 6, wherein the component D is a polyfunctional monomer which is liquid at normal temperature (25°C).

8. A flame-retardant rubber composition according to any one of claims 1 to 7, which, when subjected to steam cure, gives a vulcanized rubber having a tensile strength at break, of 13 MPa or higher.

9. A rubber product comprising a vulcanized rubber obtained by vulcanizing a flame-retardant rubber composition set forth in any one of claims 1 to 8.

10. A covering material for electrical wire, comprising a vulcanized rubber obtained by vulcanizing a flame-retardant rubber composition set forth in any one of claims 1 to 8.

## Patentansprüche

1. Flammhemmende Kautschukzusammensetzung, die als wesentliche Bestandteile einen synthetischen Kautschuk (ein Bestandteil A), ein Flammschutzmittel (ein Bestandteil B), Schwefel (ein Bestandteil C) und ein polyfunktionelles Monomer (ein Bestandteil D) umfasst, wobei eine Menge des Bestandteils B 10 bis 200 Massenteile beträgt, eine Menge des Bestandteils C 0,1 bis 15 Massenteil beträgt und eine Menge des Bestandteils D 3 bis 30 Massenteil beträgt, alle bezüglich 100 Massenteile des Bestandteils A, wobei die Flammhemmende Kautschukzusammensetzung ferner einen Vernetzungsbeschleuniger umfasst.

2. Flammhemmende Kautschukzusammensetzung nach Anspruch 1, welche ferner Siliziumdioxid (ein Bestandteil E) umfasst und wobei eine Menge des Bestandteils E 2 bis 100 Massenteile bezüglich 100 Massenteile des Bestandteils A beträgt.

3. Flammhemmende Kautschukzusammensetzung nach Anspruch 1 oder 2, wobei der Bestandteil A ein synthetischer Kautschuk ist, der zumindest ein Element ausgewählt aus der Gruppe bestehend aus einem Ethylen-α-Olefin-Copolymer-Kautschuk, einem ungesättigtes-Nitrilkonjugiertes-Dien-Kautschuk, einem Styrol-Butadien-Kautschuk und einem Acrylkautschuk enthält.

4. Flammhemmende Kautschukzusammensetzung nach einem der Ansprüche 1 bis 3, wobei der Bestandteil A als Bestandteile einen Ethylen-α-Olefin-Copolymer-Kautschuk (ein Bestandteil A-1) und einen ungesättigtes-Nitrilkonjugiertes-Dien-Kautschuk (ein Bestandteil A-2) umfasst und das Verhältnis des Bestandteils A-1 und des Bestandteils A-2 5:95 bis 85:15 ist.

5. Flammhemmende Kautschukzusammensetzung nach einem der Ansprüche 1 bis 4, wobei der Bestandteil B Magnesiumhydroxid ist.

6. Flammhemmende Kautschukzusammensetzung nach einem der Ansprüche 1 bis 5, wobei der Bestandteil D eine polyfunktionelle Acrylatverbindung oder eine polyfunktionelle Isocyanatverbindung ist.

7. Flammhemmende Kautschukzusammensetzung nach einem der Ansprüche 1 bis 6, wobei der Bestandteil D ein polyfunktionelles Monomer ist, welches bei Normaltemperatur (25°C) flüssig ist.

8. Flammhemmende Kautschukzusammensetzung nach einem der Ansprüche 1 bis 7, welche, wenn einer Dampfaushärtung unterworfen, einen vulkanisierten Kautschuk ergibt, der eine Reißfestigkeit von 13 MPa oder höher aufweist.

9. Kautschukprodukt, das einen vulkanisierten Kautschuk umfasst, der durch Vulkanisieren einer flammhemmenden Kautschukzusammensetzung nach einem der Ansprüche 1 bis 8 erhalten ist.

10. Überzugsmaterial für Elektrodraht, das einen vulkanisierten Kautschuk umfasst, der durch Vulkanisieren einer flammhemmenden Kautschukzusammensetzung nach einem der Ansprüche 1 bis 8 erhalten ist.

## Revendications

1. Composition de caoutchouc ignifuge comprenant, comme composants essentiels, un caoutchouc synthétique (un composant A), un ignifugeant (un composant B), du soufre (un composant C) et un monomère polyfonctionnel (un composant D), dans laquelle une quantité du composant B est 10 à 200 parties en masse, une quantité du composant C est 0,1 à 15 parties en masse et une quantité du composant D est 3 à 30 parties en masse, toutes pour 100 parties en masse du composant A, la composition de caoutchouc ignifuge comprenant en outre un accélérateur de réticulation.

2. Composition de caoutchouc ignifuge selon la revendication 1, qui comprend en outre de la silice (un composant E) et dans laquelle une quantité du composant E est 2 à 100 parties en masse pour 100 parties en masse du composant A.

3. Composition de caoutchouc ignifuge selon la revendication 1 ou 2, dans laquelle le composant A est un caoutchouc synthétique contenant au moins un élément choisi parmi le groupe consistant en un caoutchouc copolymérique d'éthylène-α-oléfine, un caoutchouc de diène conjugué à un nitrile insaturé, un caoutchouc de styrène-butadiène et un caoutchouc acrylique.

4. Composition de caoutchouc ignifuge selon l'une quelconque des revendications 1 à 3, dans laquelle le composant A comprend, comme composants, un caoutchouc copolymérique d'éthylène-α-oléfine (un composant A-1) et un caoutchouc de diène conjugué à un nitrile insaturé (un composant A-2) et le rapport du composant A-1 et du composant A-2 est 5:95 à 85:15.

5. Composition de caoutchouc ignifuge selon l'une quelconque des revendications 1 à 4, dans laquelle le composant B est de l'hydroxyde de magnésium.

6. Composition de caoutchouc ignifuge selon l'une quelconque des revendications 1 à 5, dans laquelle le composant D est un composé d'acrylate polyfonctionnel ou un composé d'isocyanate polyfonctionnel.

7. Composition de caoutchouc ignifuge selon l'une quelconque des revendications 1 à 6, dans laquelle le composant D est un monomère polyfonctionnel qui est liquide à une température normale (25°C).

8. Composition de caoutchouc ignifuge selon l'une quelconque des revendications 1 à 7, qui, lorsqu'elle est soumise à un durcissement à la vapeur, donne un caoutchouc vulcanisé ayant une résistance en traction à la rupture de 13 MPa ou plus.

9. Produit de caoutchouc comprenant un caoutchouc vulcanisé obtenu par vulcanisation d'une composition de caoutchouc ignifuge selon l'une quelconque des revendications 1 à 8.

10. Matériau de revêtement pour fil électrique, comprenant un caoutchouc vulcanisé obtenu par vulcanisation d'une composition de caoutchouc ignifuge selon l'une quelconque des revendications 1 à 8.
